# EUROPEAN PATENT APPLICATION

(11) **EP 4 707 322 A1**
(43) Date of publication of application: **11.03.2026**
(21) Application number: 24797434.8
(22) Date of filing: 25.04.2024
(51) Int. Cl.: C08J 3/02, C08J 3/205

(54) **BIODEGRADABLE POLYMER DISPERSION AND METHOD FOR PRODUCING SAME**

(30) Priority: 28.04.2023 KR 20230056518
(71) Applicant: CJ Cheiljedang Corporation, Seoul 04560 (KR)
(72) Inventor: HEO, Min Haeng, Seoul 04560 (KR); SHIM, Yoo-Kyoung, Seoul 04560 (KR); PARK, Soyun, Seoul 04560 (KR); JEONG, Jae Deok, Seoul 04560 (KR); LEE, Eun-Hye, Seoul 04560 (KR); YOON, Ki Chull, Seoul 04560 (KR)
(74) Representative: Meissner Bolte Partnerschaft mbB
(86) International application number: PCT/KR2024/005617
(87) International publication number: WO 2024/225780

(57) **Abstract**

The present invention pertains to a biodegradable polymer dispersion and a method for producing same. The method for preparing the biodegradable polymer dispersion comprises the steps of: (1) mixing a biodegradable polymer and an emulsifier to prepare an emulsion; (2) heating the emulsion; and (3) mixing the heated emulsion and an additive.

## Description

### Technical Field

The present disclosure relates to a biodegradable polymer dispersion and to a process for preparing the same.

### Background Art

As environmental problems become more serious due to the indiscriminate use of synthetic plastics, interest in biodegradable polymers that have physical properties similar to those of synthetic plastics and can be naturally decomposed by microorganisms in soil or the ocean is increasing.

Polyhydroxyalkanoate (PHA), as one of the biodegradable polymers, has the advantages of excellent mechanical properties, oil resistance, water resistance, and the like, along with complete biodegradability. With these advantages, a polyhydroxyalkanoate (PHA) dispersion in which polyhydroxyalkanoate (PHA) particles are dispersed is used to form a coating layer to increase the lifespan and recyclability of various products such as films, fibers, packaging materials, bottles, and the like.

However, biodegradable polymer dispersions, such as the above polyhydroxyalkanoate (PHA) dispersion, have the problem of being vulnerable to bacteria. That is, the biodegradable polymer particles present in the dispersion have a large surface area with a size of several micrometers or less, and the dispersion contains sufficient moisture for the growth of bacteria. Thus, the biodegradable polymer dispersion has low resistance (stability) to bacteria.

Accordingly, in order to increase the resistance of biodegradable polymer dispersions to bacteria, methods of introducing an antimicrobial agent into the dispersions or sterilizing the prepared dispersions at high temperatures have been attempted. However, the method of introducing an antimicrobial agent has limitations in increasing the resistance to bacteria to the required level due to the limitation in the amount of the antimicrobial agent used. In addition, the sterilization treatment at high temperatures is carried out at a high temperature of 145°C or higher, which is applied for the sterilization of synthetic plastics. This can sterilize a biodegradable polymer dispersion, while it has the problem of reducing the molecular weight of the biodegradable polymer, which is weak to heat, and thus deteriorating the physical properties of the biodegradable polymer.

### Disclosure of Invention

### Technical Problem

In order to solve the above conventional problems, an object of the present disclosure is to provide a biodegradable polymer dispersion having high resistance to bacteria even when a small amount of an antimicrobial agent is used while the basic properties of a biodegradable polymer that is relatively weak to heat are maintained, and a process for preparing the same.

### Solution to the Problem

In order to accomplish the above object, the present disclosure provides a process for preparing a biodegradable polymer dispersion, which comprises (1) mixing a biodegradable polymer and an emulsifier to prepare an emulsion; (2) subjecting the emulsion to heat treatment (warming); and (3) mixing the heat-treated emulsion with an additive.

According to an embodiment of the present disclosure, the heat treatment in step (2) may be carried out at 50°C to 80°C.

According to another embodiment of the present disclosure, the heat treatment in step (2) may be carried out for 10 minutes to 30 minutes.

According to another embodiment of the present disclosure, the process for preparing a biodegradable polymer dispersion may further comprise filtering the emulsion before the heat treatment in step (2).

According to another embodiment of the present disclosure, the additive in step (3) may comprise at least one selected from the group consisting of a thickener, a wax, an antifoaming agent, and an antimicrobial agent.

According to another embodiment of the present disclosure, step (3) may comprise (3-1) adding a first additive comprising a thickener to the heat-treated emulsion and mixing them; (3-2) adding a second additive comprising a wax to the emulsion mixed with the first additive and mixing them; and (3-3) adding a third additive comprising at least one selected from the group consisting of an antifoaming agent and an antimicrobial agent to the emulsion mixed with the second additive and mixing them.

According to another embodiment of the present disclosure, in step (3-3), the amount of the antimicrobial agent added may be 0.001% by weight to 0.5% by weight based on the total weight of the biodegradable polymer dispersion.

According to another embodiment of the present disclosure, the biodegradable polymer in step (1) may have a particle shape having an average particle diameter (D₅₀) of 0.5 µm to 5.0 µm.

According to another embodiment of the present disclosure, the biodegradable polymer in step (1) may comprise at least one selected from the group consisting of polyhydroxyalkanoate (PHA), polylactic acid (PLA), polybutylene-adipate-co-terephthalate (PBAT), polybutylene succinate (PBS), and polycaprolactone (PCL).

According to another embodiment of the present disclosure, the polyhydroxyalkanoate may be a poly(3-hydroxybutyrate-co-4-hydroxybutyrate) copolymer.

According to another embodiment of the present disclosure, the poly(3-hydroxybutyrate-co-4-hydroxybutyrate) copolymer may comprise a repeat unit derived from 4-hydroxybutyrate in an amount of 6% by weight to 20% by weight based on the total weight of the poly(3-hydroxybutyrate-co-4-hydroxybutyrate) copolymer.

According to another embodiment of the present disclosure, the emulsifier in step (1) may comprise at least one selected from the group consisting of polyvinyl alcohol (PVA), sodium dodecyl sulfonate (SDS), coco-betaine, and lecithin.

Meanwhile, in order to accomplish the above object, the present disclosure provides a biodegradable polymer dispersion prepared by the above preparation process.

According to an embodiment of the present disclosure, the biodegradable polymer dispersion may have a viscosity of 10 cP to 3,000 cP when measured with a Brookfield viscometer at 25°C.

### Advantageous Effects of Invention

In the present disclosure, a biodegradable polymer dispersion is prepared by emulsifying a biodegradable polymer, subjecting the obtained emulsion to heat treatment at a temperature much lower than the conventional high sterilization temperatures, and then adding an additive. As a result, it is possible to provide a biodegradable polymer dispersion having significantly enhanced resistance (stability) to bacteria while the properties of the biodegradable polymer that is weak to heat are maintained.

Accordingly, since the biodegradable polymer dispersion according to the present disclosure has excellent long-term storage stability by virtue of high resistance (stability) to bacteria, the shelf life of the dispersion can be extended as compared with conventional dispersions.

In addition, since the biodegradable polymer contained in the biodegradable polymer dispersion according to the present disclosure has excellent physical properties, it can be advantageously used as a coating solution to increase the lifespan and recyclability of various products such as films, fibers, packaging materials, bottles, and the like.

### Brief Description of Drawings

Fig. 1 is a flowchart schematically illustrating the process for preparing a biodegradable polymer dispersion according to an embodiment of the present invention.
Fig. 2 is an image showing the results of a bacterial contamination test in Test Example 1.

### Best Mode for Carrying out the Invention

Hereinafter, the present disclosure will be described in detail. The present disclosure is not limited to those given below, but it may be modified into various forms as long as the gist of the disclosure is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

All numbers and expressions related to the quantities of components, reaction conditions, and the like used herein are to be understood as being modified by the term "about" unless otherwise indicated.

The terms first, second, and the like in the present specification are used to describe various components. But the components should not be limited by the terms. The terms are used only for the purpose of distinguishing one component from another.

Unlike the conventional method of sterilizing a biodegradable polymer dispersion at high temperatures after it has been prepared, the present disclosure performs a heat treatment at a relatively low temperature during the process of preparing a biodegradable polymer dispersion to complete the preparation of the biodegradable polymer dispersion. As a result, a biodegradable polymer dispersion having significantly enhanced resistance (stability) to bacteria can be provided. The present disclosure is described in detail as follows.

### Process for preparing a biodegradable polymer dispersion

The process for preparing a biodegradable polymer dispersion according to the present disclosure comprises (1) mixing a biodegradable polymer and an emulsifier to prepare an emulsion; (2) subjecting the emulsion to heat treatment; and (3) mixing the heat-treated emulsion with an additive.

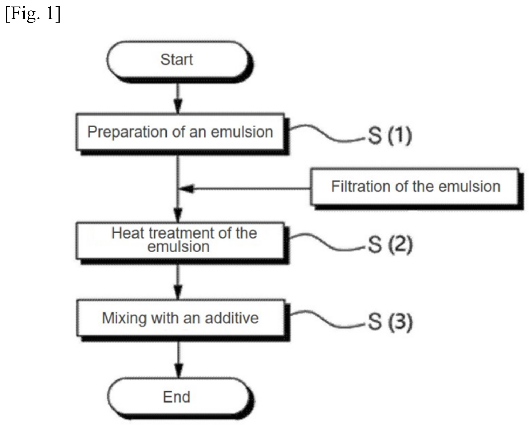

Hereinafter, each step will be described with reference to Fig. 1.

### Step (1): Preparation of an emulsion

According to the present disclosure, step (1) is a step of mixing a biodegradable polymer and an emulsifier to prepare an emulsion. Specifically, step (1) is a step of emulsifying the biodegradable polymer.

The biodegradable polymer may not be particularly limited as long as it is a polymer that can be naturally decomposed by microorganisms in soil or the ocean. Specifically, the biodegradable polymer may comprise at least one selected from the group consisting of polyhydroxyalkanoate (PHA), polylactic acid (PLA), polybutylene-adipate-co-terephthalate (PBAT), polybutylene succinate (PBS), and polycaprolactone (PCL). Preferably, the biodegradable polymer may be a polyhydroxyalkanoate (PHA) having excellent mechanical properties, oil resistance, water resistance, and the like, along with complete biodegradability.

The polyhydroxyalkanoate (PHA) may be obtained by cell disruption of microorganisms using a mechanical method or a physical method, or it may be obtained by cell disruption of microorganisms using a non-mechanical method or a chemical method.

The polyhydroxyalkanoate may have a weight average molecular weight (Mw) of 100,000 g/mole to 800,000 g/mole, 125,000 g/mole to 775,000 g/mole, 150,000 g/mole to 750,000 g/mole, 175,000 g/mole to 725,000 g/mole, or 200,000 g/mole to 700,000 g/mole, but it is not limited thereto.

The polyhydroxyalkanoate may be a copolymer comprising a repeat unit derived from at least one (at least one monomer) selected from the group consisting of 3-hydroxybutyrate (3-HB), 3-hydroxypropionate (3-HP), 3-hydroxyvalerate (3-HV), 3-hydroxyhexanoate (3-HH), 4-hydroxybutyrate (4-HB), 4-hydroxyvalerate (4-HV), 4-hydroxyhexanoate (4-HH), 5-hydroxyvalerate (5-HV), and 6-hydroxyhexanoate (6-HH), but it is not limited thereto.

The polyhydroxyalkanoate may be a crystalline polyhydroxyalkanoate (cPHA), a semi-crystalline polyhydroxyalkanoate (scPHA), or an amorphous polyhydroxyalkanoate (aPHA) depending on the types of monomers and the contents of repeat units derived therefrom. For example, the polyhydroxyalkanoate may be classified into cPHA, scPHA, or aPHA as its crystallinity is controlled depending on the content of a repeat unit derived from 4-hydroxybutyrate (4-HB).

Specifically, the polyhydroxyalkanoate may be a poly(3-hydroxybutyrate-co-4-hydroxybutyrate) copolymer comprising a repeat unit derived from 3-hydroxybutyrate (3-HB); and a repeat unit derived from 4-hydroxybutyrate (4-HB).

The poly(3-hydroxybutyrate-co-4-hydroxybutyrate) copolymer may comprise a repeat unit derived from 4-hydroxybutyrate (4-HB) (4-HB repeat unit) in an amount of 6% by weight to 20% by weight based on the total weight of the poly(3-hydroxybutyrate-co-4-hydroxybutyrate) copolymer, but it is not limited thereto. Specifically, the content of the 4-HB repeat unit may be 6.5% by weight to 19% by weight, 7% by weight to 18% by weight, 7.5% by weight to 17% by weight, 8% by weight to 16% by weight, 8% by weight to 15% by weight, 8.5% by weight to 15% by weight, 9% by weight to 14% by weight, or 9.5% by weight to 13% by weight, based on the total weight of the copolymer. As the content of the 4-HB repeat unit is within the above range, the poly(3-hydroxybutyrate-co-4-hydroxybutyrate) copolymer may be a semi-crystalline PHA (scPHA) or an amorphous PHA (aPHA). The biodegradable polymer dispersion of the present disclosure, in which such a PHA is dispersed as the biodegradable polymer, can form a coating layer with excellent mechanical properties, oil resistance, water resistance, thermal resistance, and the like.

The biodegradable polymer may have a particle shape controlled to a predetermined size. Specifically, the biodegradable polymer, as biodegradable polymer particles, may have an average particle diameter (D₅₀) of 0.5 µm to 5.0 µm, but it is not limited thereto. For example, the average particle diameter (D₅₀) of the biodegradable polymer particles may be 0.6 µm to 4.9 µm, 0.7 µm to 4.8 µm, 0.8 µm to 4.7 µm, 0.9 µm to 4.6 µm, 1 µm to 4.5 µm, 1.1 µm to 4.4 µm, 1.2 µm to 4.3 µm, or 1.2 µm to 4.2 µm. As the average particle diameter (D₅₀) of the biodegradable polymer particles is within the above range, a biodegradable polymer dispersion with excellent dispersibility can be obtained. When it is used to form a coating layer on a substrate (e.g., films and the like), a coating layer with excellent mechanical properties, oil resistance, water resistance, thermal resistance, and the like can be formed.

The biodegradable polymer may be mixed with the emulsifier in a crude solution state comprising the biodegradable polymer. In such an event, the crude solution comprising the biodegradable polymer may comprise the biodegradable polymer solids content in an amount of 10% by weight to 70% by weight based on the total weight of the crude solution, but it is not limited thereto. Specifically, the crude solution comprising the biodegradable polymer may be a crude solution comprising the biodegradable polymer solids content in an amount of 20% by weight to 70% by weight, 20% by weight to 60% by weight, or 30% by weight to 50% by weight. In addition, the crude solution comprising the biodegradable polymer may be a solution in which the biodegradable polymer (biodegradable polymer particles) is dispersed in an aqueous solvent (e.g., water).

The emulsifier is not particularly limited as long as it is a substance that can uniformly disperse the biodegradable polymer. Specifically, the emulsifier may comprise at least one selected from the group consisting of polyvinyl alcohol (PVA), sodium dodecyl sulfonate (SDS), coco-betaine, and lecithin. More specifically, the emulsifier may be a PVA emulsifier in which a polyvinyl alcohol (PVA) is dispersed in an aqueous solvent (e.g., water). As the PVA emulsifier is adopted, an emulsion in which the biodegradable polymer is uniformly and evenly dispersed can be obtained.

The PVA emulsifier may have a viscosity of 10 cPs to 1,000 cPs, 20 cPs to 700 cPs, 30 cPs to 500 cPs, or 40 cPs to 300 cPs, but it is not limited thereto.

The content of the polyvinyl alcohol (PVA) contained in the PVA emulsifier may be 1% by weight to 50% by weight, 2% by weight to 40% by weight, 3% by weight to 30% by weight, or 4% by weight to 20% by weight, based on the total weight of the PVA emulsifier, but it is not limited thereto.

The polyvinyl alcohol (PVA) may have a saponification value of 1% by mole to 99% by mole, 2% by mole to 97% by mole, 3% by mole to 95% by mole, or 4% by mole to 93% by mole, but it is not limited thereto.

When the biodegradable polymer (a) and the emulsifier (b) are mixed, the mixing ratio (a:b) (based on solids content) thereof may be 1:99 to 10:90, 2:98 to 9:91, or 3:97 to 8:92, but it is not limited thereto.

The mixing of the biodegradable polymer and the emulsifier may be carried out using a commonly known mixer (e.g., homomixer or the like). When the biodegradable polymer and the emulsifier are mixed (stirred) with the mixer, the rotation speed of the mixer may be 4,000 rpm to 10,000 rpm, 5,000 rpm to 8,500 rpm, 5,300 rpm to 8,300 rpm, or 5,500 rpm to 8,200 rpm, but it is not limited thereto. In addition, the mixing (stirring) time with the mixer may be 15 minutes to 60 minutes, 20 minutes to 50 minutes, 20 minutes to 40 minutes, or 25 minutes to 35 minutes, but it is not limited thereto.

Meanwhile, the process for preparing a biodegradable polymer dispersion according to the present disclosure may further comprise filtering the emulsion obtained by mixing the biodegradable polymer and the emulsifier before the heat treatment described later. The step of filtering the emulsion can remove particles of the biodegradable polymer having a large particle size that has not been dispersed during the mixing step with the emulsifier. As a result, an emulsion in which a biodegradable polymer having a fine particle size is uniformly dispersed can be obtained.

Filtering of the emulsion may be carried out using a commonly known filter. Specifically, the filtering step may be carried out by performing first filtering or second or more filtering. More specifically, the filtering step may comprise first filtering the emulsion using a filter having a pore size of 100 µm to 150 µm (e.g., 120 µm to 145 µm, 125 µm to 140 µm, or 125 µm to 135 µm) (e.g., a filter capable of filtering a biodegradable polymer having an average particle size of 120 µm to 150 µm); and secondarily filtering the first filtered emulsion using a filter having a pore size of 90 µm to less than 300 µm (e.g., 95 µm to 280 µm, 100 µm to 270 µm, or 100 µm to 250 µm) (e.g., a filter capable of filtering a biodegradable polymer having an average particle size of 90 µm to less than 120 µm).

### Step (2): Heat treatment of the emulsion

According to the present disclosure, step (2) is a step of subjecting the emulsion (e.g., the emulsion that has been optionally filtered as described above) to heat treatment. Specifically, step (2) is a step of subjecting the emulsion to heat treatment at a temperature significantly lower than the conventional high-temperature sterilization temperature (e.g., 145°C or higher) to sterilize the emulsion.

The temperature at which the emulsion is heat-treated may be 50°C to 80°C, but it is not limited thereto. Specifically, the temperature at which the emulsion is heat-treated may be 51°C to 78°C, 52°C to 78°C, 53°C to 75°C, 54°C to 75°C, 55°C to 73°C, 56°C to 73°C, 57°C to 70°C, 58°C to 70°C, 59°C to 68°C, or 60°C to 65°C.

In addition, the time for which the emulsion is heat-treated may be 10 minutes to 30 minutes, but it is not limited thereto. Specifically, the time for which the emulsion is heat-treated may be 11 minutes to 30 minutes, 12 minutes to 29 minutes, 13 minutes to 29 minutes, 14 minutes to 28 minutes, 15 minutes to 28 minutes, 16 minutes to 27 minutes, 17 minutes to 27 minutes, 18 minutes to 26 minutes, 18 minutes to 25 minutes, 19 minutes to 23 minutes, 19 minutes to 22 minutes, or 20 minutes to 21 minutes.

As the emulsion is subjected to heat treatment for the above time in the above temperature range, sterilization treatment can be efficiently carried out while changes in the physical properties (e.g., decrease in molecular weight) of the biodegradable polymer contained in the emulsion can be minimized. Thus, as the emulsion subjected to the heat treatment is used to prepare the dispersion according to the present disclosure, a biodegradable polymer dispersion with excellent resistance (stability) to bacteria, while containing a biodegradable polymer with maintained physical properties, can be provided.

In addition, the heat treatment of the emulsion may be carried out until the viscosity of the emulsion becomes 100 cPs to 3,000 cPs. Specifically, the viscosity of the emulsion subjected to heat treatment in step (2) may be 200 cPs to 2,000 cPs, 300 cPs to 1,500 cPs, or 350 cPs to 1,200 cPs, but it is not limited thereto.

### Step (3): Mixing of the emulsion with an additive

According to the present disclosure, step (3) is a step of mixing the heat-treated emulsion with an additive. Specifically, step (3) is a step of mixing the heat-treated emulsion with two or more additives to formulate the emulsion.

The additive is not particularly limited as long as it is a commonly known additive. Specifically, the additive may comprise at least one selected from the group consisting of a thickener, a wax, an antifoaming agent, and an antimicrobial agent. More specifically, the additive may comprise at least two selected from the group consisting of a thickener, a wax, an antifoaming agent, and an antimicrobial agent.

The mixing of the additives may be carried out stepwise. As a result, an efficiently formulated biodegradable polymer dispersion can be prepared from the emulsion. Specifically, the step of mixing additives may comprise (3-1) adding a first additive comprising a thickener to the heat-treated emulsion and mixing them; (3-2) adding a second additive comprising a wax to the emulsion mixed with the first additive and mixing them; and (3-3) adding a third additive comprising at least one selected from the group consisting of an antifoaming agent and an antimicrobial agent to the emulsion mixed with the second additive and mixing them.

Step (3-1) is a step of adding a first additive comprising a thickener to the heat-treated emulsion and mixing them. This allows the viscosity of the biodegradable polymer dispersion to be controlled to the required level. The thickener is not particularly limited as long as it is a substance that can control the viscosity of the emulsion. Specifically, the thickener may comprise at least one selected from the group consisting of starch, xanthan gum, guar gum, carboxymethyl cellulose (CMC), and carrageenan.

The mixing of the emulsion and the first additive comprising the thickener may be carried out using a commonly known mixer (e.g., homomixer or the like). When the emulsion and the first additive are mixed (stirred) with the mixer, the rotation speed of the mixer may be 4,500 rpm to 9,000 rpm, 5,000 rpm to 8,500 rpm, 5,300 rpm to 8,300 rpm, or 5,500 rpm to 8,200 rpm, but it is not limited thereto. In addition, the mixing (stirring) time with the mixer may be 10 minutes to 30 minutes, 15 minutes to 30 minutes, or 20 minutes to 25 minutes, but it is not limited thereto.

Step (3-2) is a step of adding a second additive comprising a wax to the emulsion mixed with the first additive and mixing them. This allows the water resistance and coatability of the biodegradable polymer dispersion to be enhanced. The wax is not particularly limited as long as it is a commonly known substance. Specifically, the wax may comprise at least one selected from the group consisting of bees wax, soy wax, and carnauba wax.

The mixing of the emulsion mixed with the first additive and the second additive comprising the wax may be carried out using a commonly known mixer (e.g., homomixer or the like). When the emulsion and the second additive are mixed (stirred) with the mixer, the rotation speed of the mixer may be 4,500 rpm to 9,000 rpm, 5,000 rpm to 8,500 rpm, 5,300 rpm to 8,300 rpm, or 5,500 rpm to 8,200 rpm, but it is not limited thereto. In addition, the mixing (stirring) time with the mixer may be 10 minutes to 30 minutes, 15 minutes to 30 minutes, or 20 minutes to 25 minutes, but it is not limited thereto.

Step (3-3) is a step of adding a third additive comprising at least one selected from the group consisting of an antifoaming agent and an antimicrobial agent to the emulsion mixed with the second additive and mixing them. This allows the antimicrobial performance and coatability of the biodegradable polymer dispersion to be enhanced. The antifoaming agent is not particularly limited as long as it is a commonly known substance. Specifically, the antifoaming agent may comprise at least one selected from the group consisting of a silicone antifoaming agent, a mineral oil antifoaming agent, and a polymer antifoaming agent. In addition, the antimicrobial agent is not particularly limited as long as it is a commonly known substance. Specifically, the antimicrobial agent may comprise at least one selected from the group consisting of alcohol, salicylic acid, benzoic acid, licorice extract, yucca extract, chitooligosaccharide, chitosan, 4,5-dichloro-2-n-octyl-4-isothiazolin-3-one (DCOIT), octylisothiazolone (OIT), and benzisothiazolone (BIT).

Meanwhile, in step (3-3), the amount of the antimicrobial agent added (used) to the emulsion may be 0.001% by weight to 0.5% by weight based on the total weight of the biodegradable polymer dispersion, but it is not limited thereto. Specifically, the amount of the antimicrobial agent added may be 0.005% by weight to 0.5% by weight, 0.005% by weight to 0.4% by weight, 0.01% by weight to 0.4% by weight, 0.01% by weight to 0.3% by weight, 0.02% by weight to 0.3% by weight, or 0.03% by weight to 0.2% by weight, based on the total weight of the biodegradable polymer dispersion. As the amount of the antimicrobial agent added is within the above range, a biodegradable polymer dispersion with excellent antimicrobial performance can be provided while a dosage suitable for international regulations (e.g., US FDA) is applied.

In the present disclosure, a biodegradable polymer dispersion is prepared by emulsifying a biodegradable polymer, subjecting the obtained emulsion to heat treatment at a relatively low temperature of 50°C to 80°C, and then adding additives stepwise to formulate the emulsion. As a result, it is possible to provide a biodegradable polymer dispersion having very excellent resistance (stability) to bacteria while the changes in the physical properties of the biodegradable polymer that is weak to heat are minimized.

### Biodegradable polymer dispersion

The present disclosure provides a biodegradable polymer dispersion prepared by the preparation process described above. The biodegradable polymer dispersion according to the present disclosure comprises the biodegradable polymer (biodegradable polymer particles) described above; the emulsifier described above; the additives described above; and a dispersing solvent (e.g., water or the like).

The biodegradable polymer dispersion according to the present disclosure may have excellent long-term storage stability by virtue of high resistance (stability) to bacteria.

In addition, the biodegradable polymer dispersion according to the present disclosure may have a viscosity that ensures coatability, workability, and the like. Specifically, the biodegradable polymer dispersion according to the present disclosure may have a viscosity of 10 cP to 3,000 cP, more specifically, 20 cP to 2,500 cP, 30 cP to 2,000 cP, 40 cP to 1,500 cP, or 50 cP to 1,000 cP, when measured with a Brookfield viscometer at 25°C, but it is not limited thereto.

The biodegradable polymer dispersion according to the present disclosure may have a pH that ensures long-term storage stability and the like. Specifically, the biodegradable polymer dispersion according to the present disclosure may have a pH of 5 to 9, more specifically, 5.5 to 8.8, but it is not limited thereto.

Since the biodegradable polymer dispersion according to the present disclosure has excellent long-term storage stability and coatability to substrates, it can be advantageously used as a coating solution to increase the lifespan and recyclability of various products such as films, fibers, packaging materials, bottles, and the like.

### Mode for the Invention

Hereinafter, the present disclosure will be described in detail with reference to Examples, but the scope of the present disclosure is not limited to the Examples.

### [Example 1]

Distilled water was added to dried particles (powder) of a polyhydroxyalkanoate (PHA) (Mw: 340,000 g/mole, content of a 4-HB repeat unit: 10% by weight, manufacturer: CJ CheilJedang) to obtain a crude solution with a solids content of 40% by weight. Next, the crude solution and a PVA emulsifier at a concentration of 10% were added to a disper (product name: homogenizing disper; manufacturer: PRIMIX) at a solids content of 1.5 parts by weight relative to the crude solution, and they were mixed and stirred at 1,000 rpm to 2,000 rpm for 5 minutes to obtain a suspension. Subsequently, the suspension obtained was subjected to an emulsification process using a homomixer (product name: homogenizing mixer; manufacturer: PRIMIX) by stirring at 6,000 rpm to 8,000 rpm for 30 minutes to prepare a PHA emulsion.

The PHA emulsion obtained upon completion of the emulsification procedure was first filtered through a 130-µm filter and then secondarily filtered through a 110-µm filter to remove large, non-emulsified particles.

The PHA emulsion obtained through the first and second filtration was sterilized by heat treatment thereof at 60°C for 20 minutes.

A thickener was added in an amount of 0.3% by weight (based on the total weight of the PHA dispersion) to the PHA emulsion sterilized through the heat treatment, and they were stirred in a homomixer at 6,000 rpm to 8,000 rpm for 20 minutes to perform first formulation. Next, a wax was added in an amount of 0.9% by weight (based on the total weight of the PHA dispersion) to the PHA product obtained through the first formulation, and they were stirred in a homomixer at 6,000 rpm to 8,000 rpm for 20 minutes to perform second formulation. Next, an antifoaming agent and an antimicrobial agent were added in an amount of 0.05% by weight (based on the total weight of the PHA dispersion), respectively, to the PHA product obtained through the second formulation, and they were stirred in a homomixer at 6,000 rpm to 8,000 rpm for 20 minutes to perform third formulation. Thereafter, the PHA product obtained through the third formulation was finally filtered through a 245-µm filter to prepare a PHA dispersion.

### [Example 2]

A PHA dispersion was prepared through the same procedure as in Example 1, except that the PHA emulsion obtained through the first and secondary filtration in Example 1 was subjected to heat treatment for 30 minutes.

### [Example 3]

A PHA dispersion was prepared through the same procedure as in Example 1, except that dried particles (powder) of a polyhydroxyalkanoate (PHA) (Mw: 450,000 g/mole, content of a 4-HB repeat unit: 12.6% by weight, manufacturer: CJ CheilJedang) were used instead of the polyhydroxyalkanoate dried particles (powder) used in Example 1.

### [Comparative Example 1]

Distilled water was added to dried particles (powder) of a polyhydroxyalkanoate (PHA) (Mw: 340,000 g/mole, content of a 4-HB repeat unit: 10% by weight, manufacturer: CJ CheilJedang) to obtain a crude solution with a solids content of 40% by weight. Next, the crude solution and a PVA emulsifier at a concentration of 10% were added to a disper (product name: homogenizing disper; manufacturer: PRIMIX) at a solids content of 1.5 parts by weight relative to the crude solution, and they are mixed and stirred at 1,000 rpm to 2,000 rpm for 5 minutes to obtain a suspension. Subsequently, the suspension thus obtained was subjected to an emulsification process using a homomixer (product name: homogenizing mixer; manufacturer: PRIMIX) by stirring at 6,000 rpm to 8,000 rpm for 30 minutes to prepare a PHA emulsion.

A thickener was added in an amount of 0.3% by weight (based on the total weight of the PHA dispersion) to the PHA emulsion, and they were stirred in a homomixer at 6,000 rpm to 8,000 rpm for 20 minutes to perform first formulation. Next, a wax was added in an amount of 0.9% by weight (based on the total weight of the PHA dispersion) to the PHA product obtained through the first formulation, and they were stirred in a homomixer at 6,000 rpm to 8,000 rpm for 20 minutes to perform second formulation. Next, an antifoaming agent and an antimicrobial agent were added in an amount of 0.05% by weight (based on the total weight of the PHA dispersion), respectively, to the PHA product obtained through the second formulation, and they were stirred in a homomixer at 6,000 rpm to 8,000 rpm for 20 minutes to perform third formulation. Thereafter, the PHA product obtained through the third formulation was first filtered through a 130-µm filter and then secondarily filtered through a 110-µm filter to prepare a PHA dispersion.

### [Comparative Example 2]

The PHA dispersion prepared in Comparative Example 1 was subjected to heat treatment at 70°C for 10 minutes.

### [Comparative Example 3]

A PHA dispersion was prepared through the same procedure as in Comparative Example 1, except that the antimicrobial agent was added in an amount of 0.1% by weight (based on the total weight of the PHA dispersion) when the second formulation was performed in Comparative Example 1.

The PHA dispersions of the Examples and Comparative Examples were each evaluated as follows.

### [Test Example 1] Bacterial infection test

Three types of dry media (MC-Media Pad, JNC CORPORATION) were prepared for general bacteria, fungi, and *E. coli.* 1 ml of each PHA dispersion was diluted 10 times in 9 ml of sterilized water to prepare a diluted solution. It was subjected to vortexing for 1 minute, and 1 ml was taken and evenly distributed into each dry medium. Next, the dry medium for general bacteria was cultured at 35°C for 48 hours, the dry medium for fungi was cultured at 25°C for 48 hours, and the dry medium for *E. coli* was cultured at 35°C for 24 hours. Upon completion of the culturing, the number of colonies was measured. When the number of colonies measured was less than 10, it was evaluated as no bacterial contamination (pass). When it was 10 or more, it was evaluated as bacterial contamination (contamination).

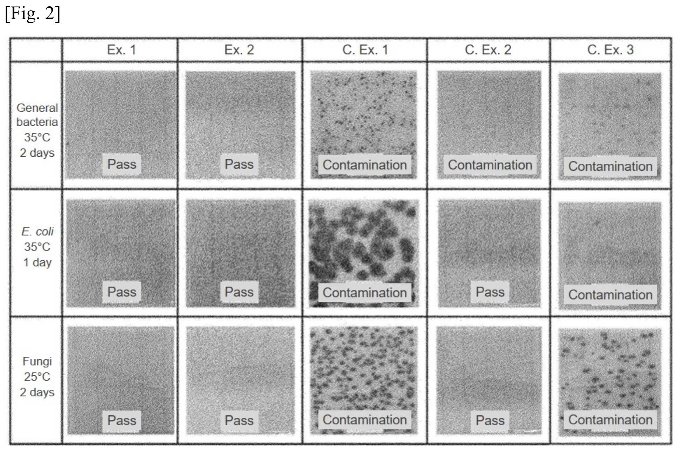

Fig. 2 shows the results of the bacterial contamination test. The PHA dispersions in Examples 1 and 2 according to the present disclosure were prepared by mixing additives after the heat treatment of the emulsion. As a result, they had excellent stability (resistance) to bacteria. In particular, when the antimicrobial agent was added after heat treatment at a temperature of about 60°C for 20 to 30 minutes, all general bacteria, *E. coli,* and fungi were sterilized, indicating no bacterial contamination occurred.

In contrast, in Comparative Example 1, in which no heat treatment was performed, serious bacterial contamination occurred. In Comparative Example 2, in which heat treatment was performed after the preparation of the PHA dispersion, bacterial contamination occurred for general bacteria while it was stable against *E. coli* and fungi. This may mean that it is desirable for the heat treatment to be performed between the PHA emulsion preparation and the additive addition.

Meanwhile, in Comparative Example 3, in which the antimicrobial agent was added in a larger amount than in Comparative Example 1, the number of bacteria was decreased as compared with Comparative Example 1; however, bacterial contamination could not be prevented. This may mean that even if the content of the antimicrobial agent is increased, bacterial contamination cannot be effectively prevented without the heat treatment. In contrast, the present disclosure can prevent bacterial contamination even when a relatively small amount of an antibacterial agent is used, by the heat treatment.

### [Test Example 2] Viscosity

Measurements were made using spindle #63 at 12 rpm using DV-1 VISCOMETER (BROOKFIELD) equipment. The results are shown in Table 1 below.

### [Test Example 3] Particle size (average particle size, D₅₀)

The measurements were made using a particle size analyzer (LS13 320 Laser Particle Size Analyzer). The results are shown in Table 1 below. In such an event, a PHA dispersion diluted 100 times using ultrapure water was used as a measurement sample.

**[Table 1]**

| | Ex. 1 | Ex. 2 | C. Ex. 1 | C. Ex. 2 |
|---|---|---|---|---|
| PHA particles concentration (% by weight) | 39.9 | 40.1 | 40.0 | 40.0 |
| Viscosity (cP) | 450 | 560 | 350 | 420 |
| pH | 4.9 | 4.9 | 4.9 | 4.8 |
| Particle size (µm) | 2.9 | 2.9 | 3.1 | 3.1 |

Referring to Table 1 above, Examples 1 and 2 and Comparative Examples 1 and 2 had the same or similar pH and particle size, which indicates that even when heat treatment was performed, the pH of the PHA dispersion and the particle size of the PHA particles were hardly changed. Meanwhile, in Example 2, in which the heat treatment time was increased by 10 minutes relative to Example 1, the viscosity of the PHA dispersion was increased, which indicates that it is necessary to control the heat treatment time when the coatability of a PHA dispersion is taken into account.

### [Test Example 4] Storage stability

The PHA dispersion prepared in Example 3 was stored in a constant temperature and humidity device at 35°C and 80% humidity for 12 weeks to evaluate its storage stability. The results are shown in Table 2 below. Specifically, after the PHA dispersion for each order was redispersed by vortexing for 1 minute, the degree of agglomeration of particles contained in the PHA dispersions was checked using a spoon. When no agglomeration was observed after the redispersion, it was evaluated that storage stability was secured.

Meanwhile, the PHA dispersion prepared in Example 3 was also subjected to the evaluation of Test Examples 1 and 3. The results are shown together in Table 2 below.

**[Table 2]**

| | Particle size (µm) | *E. coli* | Fungi | General bacteria (mold) | Storage stability |
|---|---|---|---|---|---|
| Week 0 | 3.1 | Pass | Pass | Pass | - |
| Week 1 | 2.8 | Pass | Pass | Pass | Secured |
| Week 2 | 3.2 | Pass | Pass | Pass | Secured |
| Week 3 | 3.2 | Pass | Pass | Pass | Secured |
| Week 4 | 3.2 | Pass | Pass | Pass | Secured |
| Week 8 | 3.2 | Pass | Pass | Pass | Secured |
| Week 12 | 3.2 | Pass | Pass | Pass | Secured |

Referring to Table 2 above, the PHA dispersion in Example 3 according to the present disclosure was prepared by mixing additives after the heat treatment of the emulsion. As a result, it could be redispersed for up to 12 weeks, showing excellent storage stability. It also had excellent stability (resistance) to bacteria since no bacterial contamination occurred.

## Claims

1. A process for preparing a biodegradable polymer dispersion, which comprises:
(1) mixing a biodegradable polymer and an emulsifier to prepare an emulsion;
(2) subjecting the emulsion to heat treatment; and
(3) mixing the heat-treated emulsion with an additive.

2. The process for preparing a biodegradable polymer dispersion according to claim 1, wherein the heat treatment in step (2) is carried out at 50°C to 80°C.

3. The process for preparing a biodegradable polymer dispersion according to claim 1, wherein the heat treatment in step (2) is carried out for 10 minutes to 30 minutes.

4. The process for preparing a biodegradable polymer dispersion according to claim 1, which further comprises filtering the emulsion before the heat treatment in step (2).

5. The process for preparing a biodegradable polymer dispersion according to claim 1, wherein the additive in step (3) comprises at least one selected from the group consisting of a thickener, a wax, an antifoaming agent, and an antimicrobial agent.

6. The process for preparing a biodegradable polymer dispersion according to claim 1, wherein step (3) comprises:
(3-1) adding a first additive comprising a thickener to the heat-treated emulsion and mixing them;
(3-2) adding a second additive comprising a wax to the emulsion mixed with the first additive and mixing them; and
(3-3) adding a third additive comprising at least one selected from the group consisting of an antifoaming agent and an antimicrobial agent to the emulsion mixed with the second additive and mixing them.

7. The process for preparing a biodegradable polymer dispersion according to claim 6, wherein, in step (3-3), the amount of the antimicrobial agent added is 0.001 % by weight to 0.5% by weight based on the total weight of the biodegradable polymer dispersion.

8. The process for preparing a biodegradable polymer dispersion according to claim 1, wherein the biodegradable polymer in step (1) has a particle shape having an average particle diameter (D₅₀) of 0.5 µm to 5.0 µm.

9. The process for preparing a biodegradable polymer dispersion according to claim 1, wherein the biodegradable polymer in step (1) comprises at least one selected from the group consisting of polyhydroxyalkanoate (PHA), polylactic acid (PLA), polybutylene-adipate-co-terephthalate (PBAT), polybutylene succinate (PBS), and polycaprolactone (PCL).

10. The process for preparing a biodegradable polymer dispersion according to claim 9, wherein the polyhydroxyalkanoate is a poly(3-hydroxybutyrate-co-4-hydroxybutyrate) copolymer.

11. The process for preparing a biodegradable polymer dispersion according to claim 10, wherein the poly(3-hydroxybutyrate-co-4-hydroxybutyrate) copolymer comprises a repeat unit derived from 4-hydroxybutyrate in an amount of 6% by weight to 20% by weight based on the total weight of the poly(3-hydroxybutyrate-co-4-hydroxybutyrate) copolymer.

12. The process for preparing a biodegradable polymer dispersion according to claim 1, wherein the emulsifier in step (1) comprises at least one selected from the group consisting of polyvinyl alcohol (PVA), sodium dodecyl sulfonate (SDS), coco-betaine, and lecithin.

13. A biodegradable polymer dispersion, which is prepared by the preparation process according to any one of claims 1 to 12.

14. The biodegradable polymer dispersion of claim 13, which has a viscosity of 10 cP to 3,000 cP when measured with a Brookfield viscometer at 25°C.
